# EUROPEAN PATENT APPLICATION

(11) **EP 4 549 294 A1**
(43) Date of publication of application: **07.05.2025**
(21) Application number: 23829442.5
(22) Date of filing: 24.02.2023
(51) Int. Cl.: B62D 25/24, B60L 53/16

(54) **CHARGING PORT COMPARTMENT DOOR DEVICE, AND VEHICLE**

(30) Priority: 28.06.2022 CN 202221631846 U
(71) Applicant: BYD Company Limited, Shenzhen, Guangdong 518118 (CN)
(72) Inventor: CHEN, Lingying, Shenzhen, Guangdong 518118 (CN); HUANG, Fengshou, Shenzhen, Guangdong 518118 (CN); SUN, Xing, Shenzhen, Guangdong 518118 (CN); WANG, Xing, Shenzhen, Guangdong 518118 (CN)
(74) Representative: Mathys & Squire
(86) International application number: PCT/CN2023/078204
(87) International publication number: WO 2024/001250

(57) **Abstract**

A vehicle, which is provided with a charging port compartment door device. The charging port compartment door device comprises a door cover (1), an outer skin (2), an outer frame (3), a first base (4) and a second base (5). The outer skin (2) is provided with a first through hole (21); the outer frame (3) is provided with a second through hole (31), which is in communication with the first through hole (21); the first base (4) is fixed at an inner side of the outer frame (3), such that an outer cavity (100) is formed between the first base and the outer frame; the second base (5) is fixed at an inner side of the first base (4), such that an inner cavity (200) is formed between the second base and the first base; and the first base (4) is provided with a drainage hole (441), the drainage hole (441) being in communication with the inner cavity (200), and the lowest point of the inner cavity (200) being higher than the lowest point of the drainage hole (441).

## Description

### CROSS-REFERENCE TO RELATED APPLICATIONS

The present disclosure claims priority to Chinese Patent Application No. 202221631846.1, filed on June 28, 2022 and entitled "CHARGING PORT COMPARTMENT DOOR DEVICE AND VEHICLE". The entire content of the above-referenced application is incorporated herein by reference.

### FIELD

The present disclosure relates to the technical field of vehicle charging, and more specifically, to a charging inlet compartment door device and a vehicle.

### BACKGROUND

An existing vehicle charging inlet device includes an inner charging inlet plate, an outer charging inlet plate, and a lighting assembly. The inner charging inlet plate includes a base and a baseplate. The baseplate is arranged on the base, and the baseplate is provided with at least one charging inlet. The inner charging inlet plate is hinged to the outer charging inlet plate. The lighting assembly includes a door light arranged on the base and door light switches arranged on the base and the outer charging inlet plate.

In the existing charging inlet device, a charging inlet is mounted to the base from outside to inside by using a bolt, the base is mounted to the baseplate by using a bolt, and no sealing structure is arranged at a connection position between the charging inlet and the base and between the base and the baseplate exist. Therefore, rainwater easily flows into a space behind the base through the connection position, causing inside of a vehicle to be wet. The charging inlet device of the structure is in inapplicable to a vehicle environment in which water is forbidden in a rear space of the charging inlet device.

### SUMMARY

A technical problem to be solved in the present disclosure is as follows: In an existing charging inlet device, no sealing structure is arranged at a connection position between a charging inlet and a base and between the base and a baseplate, and therefore rainwater easily flows into a space behind the base through the connection position, causing water to enter inside of a vehicle. In view of the problem, a charging inlet compartment door device and a vehicle are provided.

To resolve the foregoing technical problem, embodiments of the present disclosure provide a charging inlet compartment door device, which includes a door cover, an outer skin, an outer frame, a first base, and a second base. The outer frame is fixed to an inner side of the outer skin. The outer skin is provided with a first through hole. The outer frame is provided with a second through hole, which is in communication with the first through hole. The first base is fixed to an inner side of the outer frame, to form an outer cavity between the first base and the outer frame. The second base is fixed to an inner side of the first base, to form an inner cavity between the second base and the first base. The door cover is connected with the outer frame and configured to cover or expose the outer cavity. The first base is provided with a charging inlet via. The second base is provided with a charging inlet mounting hole located on an inner side of the charging inlet via. The charging inlet mounting hole is configured to mount a charging inlet. The charging inlet extends through the charging inlet mounting hole, the inner cavity, and the charging inlet via.

The first base is provided with a drainage hole. The drainage hole is in communication with the inner cavity. A lowest point of the inner cavity is higher than a lowest point of the drainage hole.

Optionally, an outer edge of the outer frame is provided with an outer skin overlapping edge. An inner edge of the outer frame is provided with a base overlapping edge. An outer side surface of the outer skin overlapping edge is fixed to an inner side surface of the outer skin. An inner side surface of the base overlapping edge is fixed to an outer side of the first base.

Optionally, the charging inlet compartment door device further includes a door cover sealing strip arranged on an outer surface of the base overlapping edge. The door cover is pressed against the door cover sealing strip when closed.

Optionally, the door cover is connected to the outer frame through a hinge. The outer frame is provided with a hinge groove accommodating the hinge. A lockset is arranged at a position on an inner surface of the door cover away from the hinge. The first base is provided with a lock support extending into the outer cavity. The lock support and the hinge are arranged oppositely. When the door cover is closed, the lockset overlaps the lock support to keep the door cover closed.

Optionally, the first base includes a first annular base wall and a first base baseplate connected with an inner side of the first annular base wall. An outer side of the first annular base wall is fixed to the inner side of the outer frame. The charging inlet via is arranged on the first base baseplate. The outer cavity is an inner space defined by the first annular base wall.

Optionally, the second base includes a second annular base wall and a second base baseplate connected with an inner side of the second annular base wall. An outer side of the second annular base wall is fixed to an inner side of the first base baseplate. The charging inlet mounting hole is arranged on the second base baseplate. The inner cavity is an inner space defined by the second annular base wall.

The drainage hole is arranged on the first base baseplate.

Optionally, an included angle between a bottom of the first annular base wall and a horizontal plane is in a range of 5 degrees to 20 degrees. An included angle between a bottom of the second annular base wall and the horizontal plane is in a range of 5 degrees to 20 degrees.

Optionally, nuts configured to mount the charging inlet are fixed to the second base baseplate. The nuts are distributed around the charging inlet mounting hole.

Optionally, the charging inlet compartment door device further includes a charging inlet sealing strip. The charging inlet sealing strip is press-fitted between a hole wall of the charging inlet via and an outer periphery of the charging inlet.

Optionally, a sensing device support is arranged on an inner surface of the door cover. A sensor end A is mounted to the sensing device support. A sensor end B is arranged on the first base. When the door cover is closed, the sensor end A is opposite to the sensor end B.

According to the charging inlet compartment door device in the embodiments of the present disclosure, the lowest point of the inner cavity is higher than the lowest point of the drainage hole, and therefore when a small amount of water seeping through the first base enters the second base (in other words, the water enters the inner cavity from the outer cavity), the water is quickly discharged through the drainage hole on the first base. The water neither accumulates in the inner cavity, nor directly enters an internal environment of the vehicle, thereby preventing inside of the vehicle from getting wet. In this way, water is prevented from leaking into a vehicle through a charging inlet compartment door device mounted at a position that brings outside of the vehicle into communication with inside of the vehicle.

According to another aspect, an embodiment of the present disclosure further provides a vehicle, which includes the foregoing charging inlet compartment door device.

### BRIEF DESCRIPTION OF THE DRAWINGS

FIG. 1 is a state diagram of a charging inlet compartment door device when a door cover is opened according to an embodiment of the present disclosure;
FIG. 2 is a state diagram of the charging inlet compartment door device when the door cover is closed according to an embodiment of the present disclosure;
FIG. 3 is a sectional view in a direction A-A in FIG. 2;
FIG. 4 is an enlarged view of a in FIG. 3;
FIG. 5 is an enlarged view of b in FIG. 3;
FIG. 6 is a sectional view in a direction B-B in FIG. 2;
FIG. 7 is an enlarged view of c in FIG. 6;
FIG. 8 is an exploded view the charging inlet compartment door device according to an embodiment of the present disclosure;
FIG. 9 is an enlarged view of an outer frame of the charging inlet compartment door device according to an embodiment of the present disclosure;
FIG. 10 is an enlarged view of a first base of the charging inlet compartment door device according to an embodiment of the present disclosure;
FIG. 11 is an enlarged view of a second base of the charging inlet compartment door device according to an embodiment of the present disclosure;
FIG. 12 is a schematic diagram of connection among the charging inlet compartment door device, the charging inlet, and a charging connector according to an embodiment of the present disclosure.
FIG. 13 is a state diagram of a charging inlet compartment door device when a door cover is opened according to another embodiment of the present disclosure.

In the drawings:
1. Door cover; 11. Lockset; 12. Sensing device support; 13. Sensor end A; 2. Outer skin; 21. First through hole; 3. Outer frame; 31. Second through hole; 32. Outer skin overlapping edge; 33. Base overlapping edge; 34. Hinge groove; 4. First base; 41. Charging inlet via; 42. Lock support; 43. First annular base wall; 44. First base baseplate; 441. Drainage hole; 45. Sensor end B; 46. Button; 47. Lamp; 5. Second base; 51. Charging inlet mounting hole; 52. Second annular base wall; 53. Second base baseplate; 54. Nut; 6. Charging inlet sealing strip; 7. Door cover sealing strip; 8. Hinge; 100. Outer cavity; 200. Inner cavity; 300. Charging inlet; 400. Charging connector.

### DETAILED DESCRIPTION

To make technical problems to be solved in the present disclosure, technical solutions, and beneficial effects more comprehensible, the present disclosure is described below in further detail with reference to drawings and embodiments. It should be understood that, the specific embodiments described therein are merely used for explaining the present disclosure, and are not intended to limit the present disclosure.

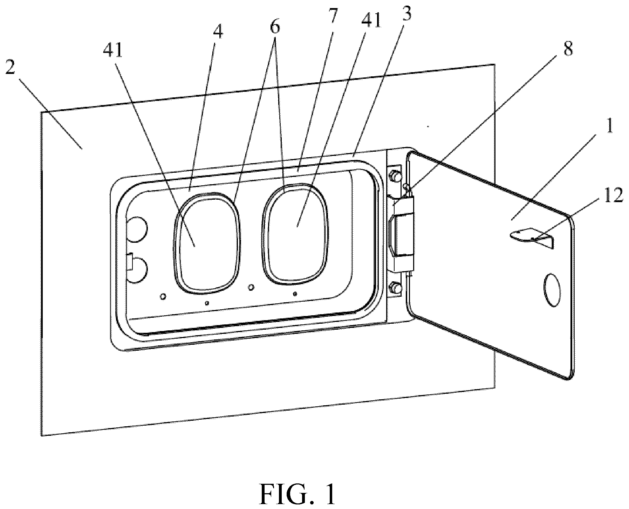

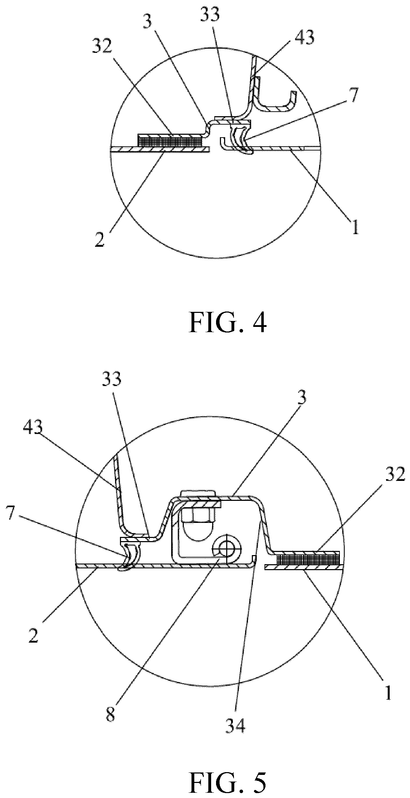

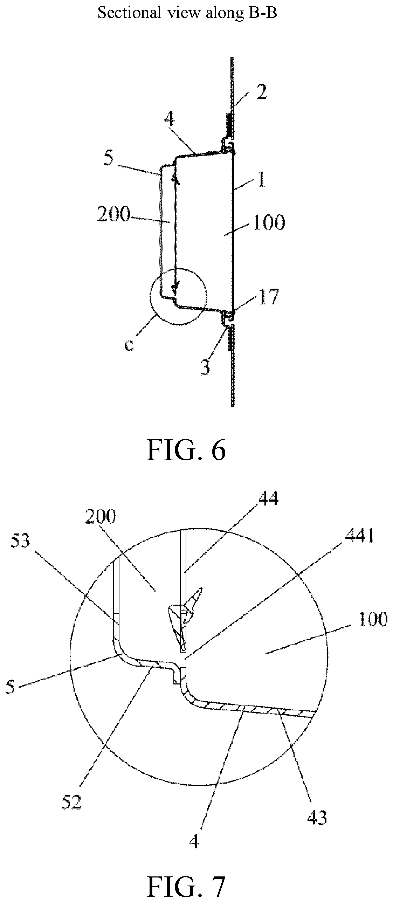

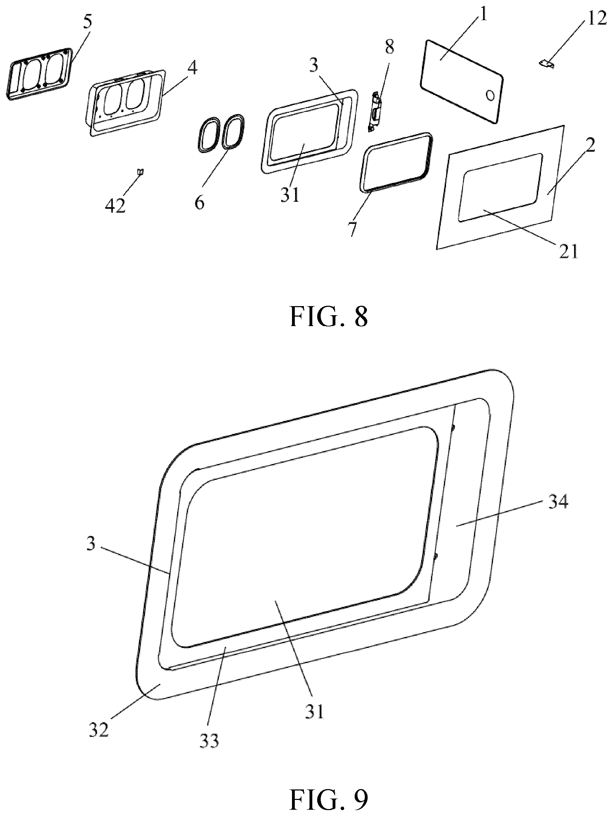

As shown in FIG. 1 to FIG. 12, a charging inlet compartment door device provided in an embodiment of the present disclosure includes a door cover 1, an outer skin 2, an outer frame 3, a first base 4, and a second base 5. The outer frame 3 is fixed to an inner side of the outer skin 2. The outer skin 2 is provided with a first through hole 21. The outer frame 3 is provided with a second through hole 31, which is in communication with the first through hole 21. The first base 4 is fixed to an inner side of the outer frame 3, to form an outer cavity 100 between the first base and the outer frame. The second base 5 is fixed to an inner side of the first base 4, to form an inner cavity 200 between the second base and the first base. The door cover 1 is connected with the outer frame 3 and configured to cover or expose the outer cavity 100. The first base 4 is provided with a charging inlet via 41. The second base 5 is provided with a charging inlet mounting hole 51 located on an inner side of the charging inlet via 41. The charging inlet mounting hole 51 is configured to mount a charging inlet 300. The charging inlet 300 extends through the charging inlet mounting hole 51, the inner cavity 200, and the charging inlet via 41. The first base 4 is provided with a drainage hole 441. The drainage hole 441 is in communication with the inner cavity 200. A lowest point of the inner cavity 200 is higher than a lowest point of the drainage hole 441.

A material of the outer skin 2 may be a steel plate, an aluminum plate, a composite material, or the like. The outer skin 2 may be a vehicle body skin, a compartment door skin, or the like.

According to the charging inlet compartment door device in this embodiment of the present disclosure, the lowest point of the inner cavity 200 is higher than the lowest point of the drainage hole 441, and therefore when a small amount of water seeping through the first base 4 enters the second base 5 (in other words, the water enters the inner cavity 200 from the outer cavity 100), the water is quickly discharged through the drainage hole 441 on the first base 4. The water neither accumulates in the inner cavity 200, nor directly enters an internal environment of the vehicle, thereby preventing inside of the vehicle from getting wet. In this way, water is prevented from leaking into a vehicle through a charging inlet compartment door device mounted at a position that brings outside of the vehicle into communication with inside of the vehicle.

In an embodiment, the charging inlet compartment door device further includes a charging inlet sealing strip 6. The charging inlet sealing strip 6 is press-fitted between a hole wall of the charging inlet via 41 and an outer periphery of the charging inlet 300. The charging inlet sealing strip 6 may be an integrally formed circular seamless sealing strip.

The charging inlet sealing strip 6 is press-fitted between a hole wall of the charging inlet via 41 of the first base 4 and an outer periphery of the charging inlet 300 to form a first waterproof layer, so as to prevent a large amount of water from entering the second base 5 through the charging inlet via 41.

A hinge, a limiting block, and a charging inlet mounting plate of a charging inlet device in the related art use independent supports. Therefore, a large number of supports and fasteners are arranged, and long fitting time is needed. In addition, all components are visibly mounted in a visible compartment. The entire charging inlet device is messy and complex, and has a poor appearance. However, in the charging inlet compartment door device in this embodiment of the present disclosure, the first base 4 and the second base 5 are sheet metal stamping parts formed at one time, which provide an existing support function without problems such as a redundant support and an exposed fastener. The structure is simple, and is overall clear and simple, and has a good appearance.

Optionally, the door cover 1, the outer frame 3, the first base 4, and the second base 5 are all sheet metal stamping parts formed at one time. After a product is formed by stamping at one time, a mounting hole is provided based on a product demand. The product has a simple structure, high versatility, high product mounting precision, and a beautiful appearance. Materials of the door cover 1, the outer frame 3, the first base 4, and the second base 5 may be a steel plate of 1 mm to 2 mm.

In the charging inlet device in the related art, no sealing structure is arranged between the charging inlet and the base. Therefore, dust and rainwater flow into a space behind the base through a connecting gap. The dust accumulates over time. However, in the charging inlet compartment door device in this embodiment of the present disclosure, the charging inlet sealing strip 6 is mounted in the charging inlet via 41 of the first base 4, to achieve interference fit between the charging inlet 300 and the charging inlet via 41 through the charging inlet sealing strip 6. In this way, not only an edge of the charging inlet via 41 can be shielded, which improves an appearance, but also sealing is provided, which prevents a large amount of water from flowing into the second base 5 through the charging inlet via 41 of the first base 4. Moreover, the charging inlet sealing strip 6 can eliminate a fitting error and prevent the charging inlet 300 from being damaged in the charging inlet via 41.

In addition, the charging inlet mounting hole 51 is arranged on the second base 5, and the charging inlet 300 is mounted from inside to outside through a fastener. The fastener configured to mount the charging inlet 300 is not exposed, which achieves a good appearance.

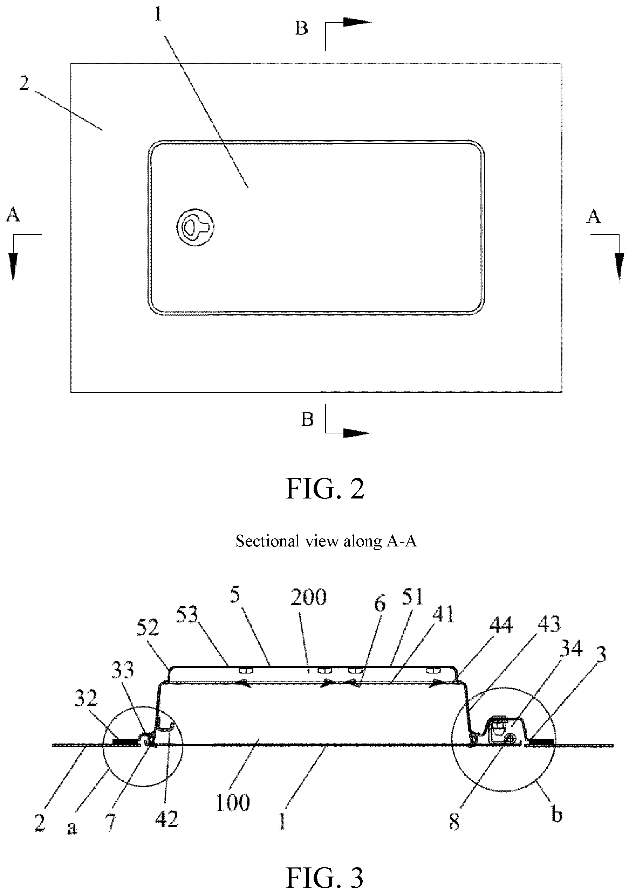

In an embodiment, referring to FIG. 3 to FIG. 6 and FIG. 9, an outer edge of the outer frame 3 is provided with an outer skin overlapping edge 32, and an inner edge (an edge of the second through hole 31) of the outer frame 3 is provided with a base overlapping edge 33. An outer side surface of the outer skin overlapping edge 32 is fixed to an inner side surface of the outer skin 2. An inner side surface of the base overlapping edge 33 is fixed to an outer side of the first base 4. Optionally, the outer skin overlapping edge 32 is adhesively bonded with an inner surface of the outer skin 2. In this way, not only firm connection is achieved, but also sealing is provided. In addition, the mounting is simple and convenient, and needs only a short working time. In an embodiment, referring to FIG. 3 to FIG. 6, the charging inlet compartment door device further includes a door cover sealing strip 7 arranged on an outer surface of the base overlapping edge 33. The door cover 1 is pressed against the door cover sealing strip 7 when closed. The door cover sealing strip 7 may be an integrally formed circular foam tube sealing strip.

Materials of the charging inlet sealing strip 6 and the door cover sealing strip 7 may be Ethylene-Propylene-Diene Monomer rubber.

In the charging inlet device in the related art, no sealing structure is arranged between an outer plate and the base. Therefore, a large amount of dust and rainwater flow into the compartment through a gap of the outer plate. The dust accumulates over time, brings a dirty view. However, in the charging inlet compartment door device in this embodiment of the present disclosure, the door cover sealing strip is mounted between the outer frame 3 and the door cover 1, which not only can provide sealing to block water and dust, to keep the compartment clean for a long time, but also can provide control for a surface difference of the door cover 1, and provide buffering and limitation during opening/closing of the door cover 1.

In an embodiment, referring to FIG. 1, FIG. 3 to FIG. 6, FIG. 9, and FIG. 12, the door cover 1 is connected to the outer frame 3 through a hinge 8. The outer frame 3 is provided with a hinge groove 34 accommodating the hinge 8. A lockset 11 is arranged at a position on an inner surface of the door cover 1 away from the hinge 8. The first base 4 is provided with a lock support 42 extending into the outer cavity 100. The lock support 42 and the hinge 8 are arranged oppositely. When the door cover 1 is closed, the lockset 11 overlaps the lock support 42 to keep the door cover 1 closed. The outer frame 3 has the outer skin overlapping edge 32, the base overlapping edge 33, and the hinge groove 34 integrated thereon, and therefore has a compact structure and complete functions. The problems such as a redundant support and the exposed fastener and hinge 8 are avoided. The structure is simple, and is overall clear and simple, and has a good appearance.

The door cover 1 is connected to the outer frame 3 by using the hinge 8. The hinge 8 allows the door cover 1 to be opened at a maximum angle (for example, 90 degrees to 100 degrees) without interfering with a surrounding product.

The hinge 8 may be a casting member made of steel.

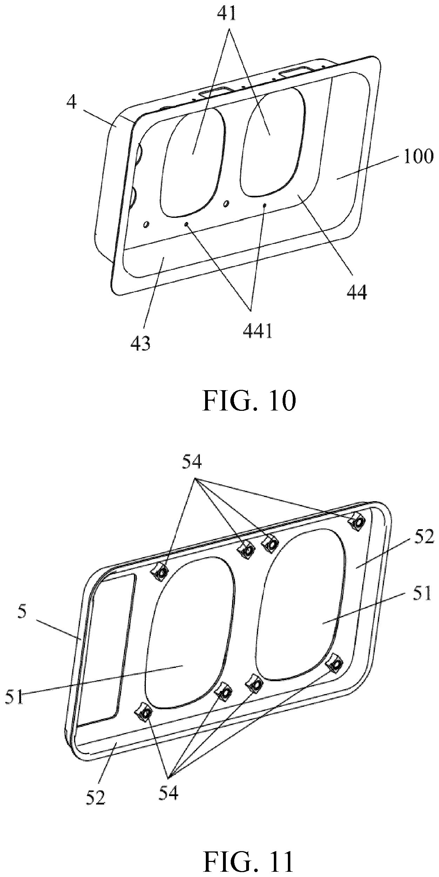

In an embodiment, referring to FIG. 10, the first base 4 includes a first annular base wall 43 and a first base baseplate 44 connected with an inner side of the first annular base wall 43. An outer side of the first annular base wall 43 is fixed to the inner side of the outer frame 3. The charging inlet via 41 is arranged on the first base baseplate 44. The outer cavity 100 is an inner space defined by the first annular base wall 43.

In an embodiment, referring to FIG. 3, FIG. 6, and FIG. 11, the second base 5 includes a second annular base wall and a second base baseplate 53 connected with an inner side of the second annular base wall 52. An outer side of the second annular base wall 52 is fixed to an inner side of the first base baseplate 44. The charging inlet mounting hole 51 is arranged on the second base baseplate 53. The inner cavity 200 is an inner space defined by the second annular base wall 52. The drainage hole 441 is arranged on the first base baseplate 44, and the lowest point of the inner cavity 200 is higher than the lowest point of the drainage hole 441.

Multiple drainage holes 441 may be provided. The drainage hole 441 allows accumulating water in the inner cavity 200 to be discharged. Since the lowest point of the inner cavity 200 is higher than the lowest point of the drainage hole 441, the accumulated water can be better discharged.

In an embodiment, an included angle between a bottom of the first annular base wall 43 and a horizontal plane (a draft angle of the first base 4) is in a range of 5 degrees to 20 degrees. An included angle between a bottom of the second annular base wall 52 and the horizontal plane (a draft angle of the second base 5) is in a range of 5 degrees to 20 degrees. In this way, the bottom of the first annular base wall 43 has an inclined surface which is gradually lower from inside to outside, and the bottom of the second annular base wall 52 has an inclined surface which is gradually lower from inside to outside, and therefore the water entering the inner cavity 200 can flow out along the inclined surfaces at a higher speed, thereby avoiding avoids water accumulation or poor drainage. Optionally, the included angle between the bottom of the first annular base wall 43 and the horizontal plane may be 5 degrees, 10 degrees, 15 degrees, 20 degrees, or the like. The included angle between the bottom of the second annular base wall 52 and the horizontal plane may be 5 degrees, 10 degrees, 15 degrees, 20 degrees, or the like. Alternatively, the included angle between the bottom of the first annular base wall 43 and the horizontal plane and the included angle between the bottom of the second annular base wall 52 and the horizontal plane may be other values between 5 degrees and 20 degrees, which are not enumerated herein.

In an embodiment, referring to FIG. 11, nuts 54 configured to mount the charging inlet 300 are fixed to the second base baseplate 53. The nuts 54 are distributed around the charging inlet mounting hole 51. The nuts 54 are directly welded to an outer side surface of the second base baseplate 53. Optionally, four nuts 54 are arranged around the charging inlet mounting hole 51, to mount the charging inlet 300 more firmly. Since the nuts 54 are arranged around the charging inlet mounting hole 51, the charging inlet 300 may be mounted from inside to outside. When maintenance is required, the charging inlet 300 may be disassembled and examined and repaired merely by opening a decorative member in the vehicle.

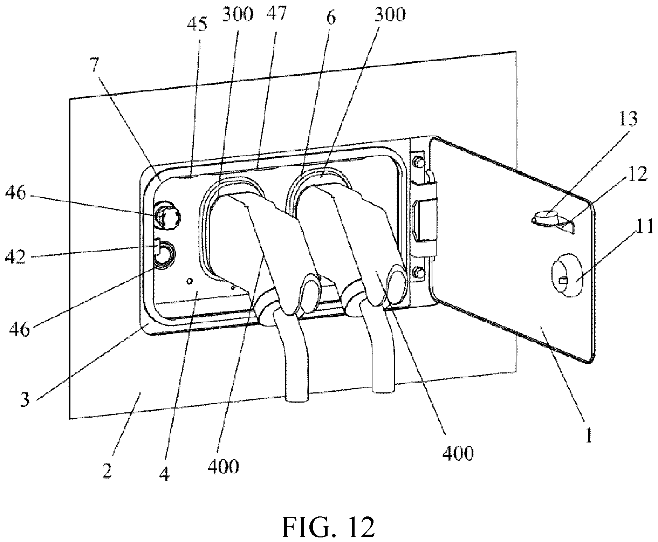

In some embodiments, referring to FIG. 12, a sensing device support 12 is arranged on an inner surface of the door cover 1. A sensor end A 13 is mounted to the sensing device support. A sensor end B 45 is arranged on the first base 4. When the door cover 1 is closed, the sensor end A 13 is opposite to the sensor end B 45. When the sensor end A 13 is close and opposite to the sensor end B 45, a closing signal of the door cover 1 is triggered. When the sensor end A 13 is away from the sensor end B 45, an opening signal of the door cover 1 is triggered.

In an embodiment, referring to FIG. 12, the first base 4 is provided with a button 46 and a lamp 47. The lamp 47 is configured to illuminate the charging inlet compartment door device. The button 46 is configured to trigger another function of the vehicle.

In an embodiment, the first base 4 is welded to the inner side of the outer frame 3, and a position in which the first base 4 is welded to the outer frame 3 is coated with a sealant. Specifically, the outer side of the first annular base wall 43 is welded to the inner side surface of the base overlapping edge 33. The sealant prevents water from entering the vehicle through a weld joint between the first base 4 and the outer frame 3.

In an embodiment, the second base 5 is welded to the inner side of the first base 4, and a weld joint between the first base 4 and the second base 5 is coated with a sealant. Specifically, the outer side of the second annular base wall 52 is welded to the inner side surface of the first base baseplate 44. The sealant prevents water from entering the vehicle through the weld joint between the first base 4 and the second base 5. In an embodiment, referring to FIG. 1 and FIG. 12, two charging inlets 300 are arranged. One of the two charging inlets 300 is a fast charging inlet, and the other is a slow charging inlet. Two charging inlet mounting holes 51 and two charging inlet vias 41 are correspondingly provided.

Alternatively, both of the two charging inlets 300 may be slow charging inlets or fast charging inlets.

Referring to FIG. 12, a charging connector 400 is plugged into the charging inlet 300 to charge the vehicle.

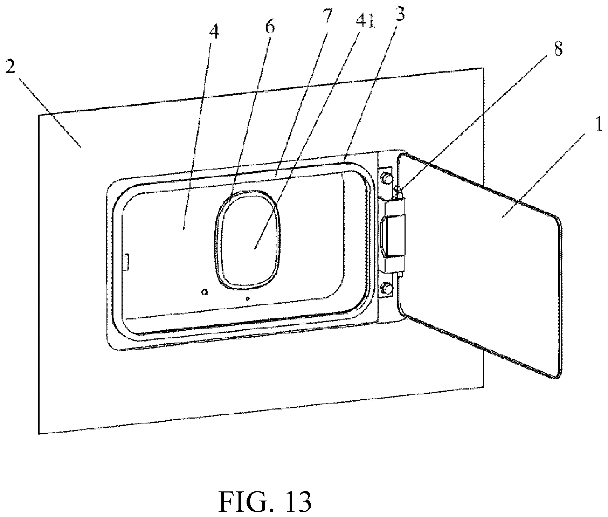

FIG. 13 is a charging inlet compartment door device according to another embodiment of the present disclosure. A difference between this embodiment and the embodiment shown in FIG. 1 is that only one charging inlet 300 is provided. The charging inlet 300 is a slow charging inlet or a fast charging inlet.

According to another aspect, an embodiment of the present disclosure further provides a vehicle, which includes the charging inlet compartment door device in the foregoing embodiment.

The foregoing descriptions are merely preferred embodiments of the present disclosure, and are not intended to limit the present disclosure. Any modification, equivalent replacement, or improvement made within the spirit and principle of the present disclosure shall fall within the protection scope of the present disclosure.

## Claims

1. A charging inlet compartment door device, comprising a door cover (1), an outer skin (2), an outer frame (3), a first base (4), and a second base (5), the outer frame (3) being fixed to an inner side of the outer skin (2); the outer skin (2) being provided with a first through hole (21); the outer frame (3) being provided with a second through hole (31), which is in communication with the first through hole (21); the first base (4) being fixed to an inner side of the outer frame (3), to form an outer cavity (100) between the first base and the outer frame; the second base (5) being fixed to an inner side of the first base (4), to form an inner cavity (200) between the second base and the first base; the door cover (1) being connected with the outer frame (3) and configured to cover or expose the outer cavity (100); the first base (4) being provided with a charging inlet via (41); the second base (5) being provided with a charging inlet mounting hole (51) located on an inner side of the charging inlet via (41); the charging inlet mounting hole (51) being configured to mount a charging inlet (300); the charging inlet (300) extending through the charging inlet mounting hole (51), the inner cavity (200), and the charging inlet via (41);
the first base (4) being provided with a drainage hole (441); the drainage hole (441) being in communication with the inner cavity (200); and a lowest point of the inner cavity (200) being higher than a lowest point of the drainage hole (441).

2. The charging inlet compartment door device according to claim 1, wherein an outer edge of the outer frame (3) is provided with an outer skin overlapping edge (32); an inner edge of the outer frame (3) is provided with a base overlapping edge (33); an outer side surface of the outer skin overlapping edge (32) is fixed to an inner side surface of the outer skin (2); and an inner side surface of the base overlapping edge (33) is fixed to an outer side of the first base (4).

3. The charging inlet compartment door device according to claim 2, further comprising a door cover sealing strip (7) arranged on an outer surface of the base overlapping edge (33); and the door cover (1) being pressed against the door cover sealing strip (7) when closed.

4. The charging inlet compartment door device according to claim 2 or 3, wherein the door cover (1) is connected to the outer frame (3) through a hinge (8); the outer frame (3) is provided with a hinge groove (34) accommodating the hinge (8); a lockset (11) is arranged at a position on an inner surface of the door cover (1) away from the hinge (8); the first base (4) is provided with a lock support (42) extending into the outer cavity (100); the lock support (42) and the hinge (8) are arranged oppositely; and when the door cover (1) is closed, the lockset (11) overlaps the lock support (42) to keep the door cover (1) closed.

5. The charging inlet compartment door device according to any of claims 1 to 4, wherein the first base (4) comprises a first annular base wall (43) and a first base baseplate (44) connected with an inner side of the first annular base wall (43); an outer side of the first annular base wall (43) is fixed to the inner side of the outer frame (3); the charging inlet via (41) is arranged on the first base baseplate (44); and the outer cavity (100) is an inner space defined by the first annular base wall (43).

6. The charging inlet compartment door device according to claim 5, wherein the second base (5) comprises a second annular base wall (52) and a second base baseplate (53) connected with an inner side of the second annular base wall (52); an outer side of the second annular base wall (52) is fixed to an inner side of the first base baseplate (44); the charging inlet mounting hole (51) is arranged on the second base baseplate (53); the inner cavity (200) is an inner space defined by the second annular base wall (52); and
the drainage hole (441) is arranged on the first base baseplate (44).

7. The charging inlet compartment door device according to claim 6, wherein an included angle between a bottom of the first annular base wall (43) and a horizontal plane is in a range of 5 degrees to 20 degrees; and an included angle between a bottom of the second annular base wall (52) and the horizontal plane is in a range of 5 degrees to 20 degrees.

8. The charging inlet compartment door device according to claim 6 or 7, wherein nuts (54) configured to mount the charging inlet (300) are fixed to the second base baseplate (53); and the nuts (54) are distributed around the charging inlet mounting hole (51).

9. The charging inlet compartment door device according to any of claims 1 to 8, further comprising a charging inlet sealing strip (6), the charging inlet sealing strip (6) being press-fitted between a hole wall of the charging inlet via (41) and an outer periphery of the charging inlet (300).

10. The charging inlet compartment door device according to any of claims 1 to 9, wherein a sensing device support (12) is arranged on an inner surface of the door cover (1); a sensor end A (13) is mounted to the sensing device support (12); a sensor end B (45) is arranged on the first base (4); and when the door cover (1) is closed, the sensor end A (13) is opposite to the sensor end B (45).

11. A vehicle, comprising the charging inlet compartment door device according to any of claims 1 to 10.
